(19) Europäisches Patentamt

European Patent Office

Office européen des brevets

(11) **EP 1 650 752 A1**

(12) **EUROPEAN PATENT APPLICATION**
published in accordance with Art. 158(3) EPC

(43) Date of publication:
**26.04.2006 Bulletin 2006/17**

(51) Int Cl.:
**G11B 7/24** (1968.09)   **G11B 7/26** (1968.09)
**G11B 7/00** (1968.09)   **B41M 5/26** (1968.09)

(21) Application number: **04748051.2**

(22) Date of filing: **22.07.2004**

(86) International application number:
**PCT/JP2004/010787**

(87) International publication number:
**WO 2005/010878 (03.02.2005 Gazette 2005/05)**

(84) Designated Contracting States:
**AT BE BG CH CY CZ DE DK EE ES FI FR GB GR
HU IE IT LI LU MC NL PL PT RO SE SI SK TR**

(30) Priority: **24.07.2003 JP 2003278710**

(71) Applicant: **TDK Corporation
Chuo-ku,
Tokyo 103-8272 (JP)**

(72) Inventors:
• **FUKUZAWA, Narutoshi
  Chuo-ku,
  Tokyo 103-8272 (JP)**

• **KIKUKAWA, Takashi
  Chuo-ku,
  Tokyo 103-8272 (JP)**
• **KOBAYASHI, Tatsuhiro
  Chuo-ku,
  Tokyo 103-8272 (JP)**

(74) Representative: **Grünecker, Kinkeldey,
Stockmair & Schwanhäusser
Anwaltssozietät
Maximilianstrasse 58
80538 München (DE)**

(54) **OPTICAL RECORDING MEDIUM AND PROCESS FOR PRODUCING THE SAME, AND DATA RECORDING METHOD AND DATA REPRODUCING METHOD FOR OPTICAL RECORDING MEDIUM**

(57)    An optical recording medium 10 of the present invention has a support substrate 11 and a light-transmitting layer 12, and further has a first dielectric layer 31, a noble metal nitride layer 23, a second dielectric layer 32, a light absorption layer 22, a third dielectric layer 33, and a reflection layer 21, all of which are interposed between the light-transmitting layer 12 and the support substrate 11. In the optical recording medium of the present invention, a laser beam 40 is irradiated on the substrate from the light entrance face 12a, to thus locally decompose the noble metal nitride layer 23, so that record marks can be formed by means of resultant bubble pits. In this case, a gas filling the bubble pits, which are to form the record marks, is a chemically-stable nitrogen gas ($N_2$). The risk of this gas oxidizing or corroding other layers is very remote, and high storage reliability can be achieved.

## FIG. 1 (a)

EP 1 650 752 A1

## FIG. 1 (b)

## Description

<Field of the Invention>

The present invention relates to an optical recording medium and a method for manufacturing the optical recording medium, and more particularly, to an optical recording medium of a type in which record marks are formed by means of generation of a gas, as well as to a method for manufacturing the recording medium. Moreover, the present invention relates to a method for recording and reproducing data on and from an optical recording medium, as well as to a method for recording and reproducing data on and from an optical recording medium of a type in which record marks are formed by generation of a gas.

<Background>

In recent years, optical recording mediums typified by a CD (Compact Disc) and a DVD (Digital Versatile Disc) have been widely used as recording mediums used for recording a large volume of digital data.

Among CDs, a CD of a type (CD-ROM) that does not allow additional writing or rewriting of data has a structure where a reflection layer and a protective layer are stacked on a light-transmitting substrate having a thickness of about 1.2 mm. Reproduction of data can be carried out by irradiating a laser beam having a wavelength of about 780 nm onto a reflection layer from the light-transmitting substrate side. Meanwhile, a CD of a type (a CD-R) that enables additional writing of data and a CD of a type (a CD-RW) that enables rewriting of data have a structure where a recording layer is added between the light-transmitting substrate and the reflection layer. Recording and reproduction of data can be carried out by irradiating a laser beam having a wavelength of about 780 nm onto a recording layer from the light-transmitting substrate side.

In the field of CDs, an objective lens having a numerical aperture of about 0.45 is used for focusing purpose, whereby a spot of a laser beam on the reflection layer or the recording layer is narrowed to a size of about 1.6 $\mu$m. Thus, in the field of CDs, a recording capacity of about 700 MB and a data transfer rate of about 1 Mbps are achieved at a standard linear velocity (about 1.2 m/sec.).

Of DVDs, a DVD of a type (a DVD-ROM) that does not allow additional writing or rewriting of data has a structure formed by bonding together a laminated body, which is formed by stacking a reflection layer and a protective layer on a light-transmitting substrate having a thickness of about 0.6 mm, and a dummy substrate having a thickness of about 0.6 mm, by way of an adhesive layer. Data can be reproduced by irradiating a laser beam having a wavelength of about 635 nm onto the reflection layer from the light-transmitting substrate side. Meanwhile, a DVD of a type (a DVD-R or the like) that enables additional writing of data and a DVD of a type (a DVD-RW or the like) that enables rewriting of data have a structure where a recording layer is additionally interposed between the light-transmitting substrate and the reflection layer. Recording and reproduction of data can be carried out by irradiating on the recording layer a laser beam having a wavelength of about 635 nm from the light-transmitting substrate side.

In the field of DVDs, an objective lens having a numerical aperture of about 0.6 is used for focusing purpose, whereby a spot of a laser beam on the reflection layer or the recording layer is narrowed to a size of about 0.93 $\mu$m. As mentioned above, a laser beam, whose wavelength is shorter than that of the wavelength used for CDs, and the objective lens, which is greater in numerical aperture than that used for CDs, are used for recording and reproducing data on and from a DVD. Therefore, a beam spot is smaller than that achieved in the field of CDs is realized. On this account, in the field of DVDs, a recording capacity of about 4.7 GB/surface and a data transfer rate of about 11 Mbps at a standard linear velocity (of about 3.5 m/sec.) are fulfilled.

An optical recording medium, which has a data recording capacity in excess of that of a DVD and can fulfill a data transfer rate in excess of that of a DVD, has recently been put forth. In relation to such a next-generation-type optical recording medium, a laser beam having a wavelength of about 405 nm and an objective lens having a numerical aperture of about 0.85 are used for achieving a large capacity and a high data transfer rate. On this account, the spot of the laser beam is narrowed to a size of about 0.43 $\mu$m, and a recording capacity of about 25 GB/surface and a data transfer rate of about 36 Mbps at a standard linear velocity (of about 4.9 m/sec.) can be realized.

As mentioned above, since the objective lens having a very high numerical aperture is used for the next-generation type optical recording medium, the thickness of a light-transmitting layer, which is to become an optical path for the laser beam, is set to an extremely low thickness on the order of about 100 $\mu$m, in order to ensure a sufficient tilt margin and prevent occurrence of coma aberration. For this reason, the optical recording medium of the next-generation type encounters difficulty in forming various types of functional layers, such as the recording layer, on the light-transmitting substrate as in the case of a CD, a DVD, an optical recording medium of a current type, and the like. Currently under review is a method for forming a reflection layer and a recording layer, in the form of films, on a support substrate; forming a thin resin layer on these layers by means of the spin coating method, or the like; and using the thus-formed resin layer as a light-transmitting layer. In contrast with the optical recording medium of the current type for which films are formed in sequence from a light entrance face, films are formed in reverse sequence from the light entrance face during manufacture of the optical recording medium of the next-generation type.

As has been described, an increase in the capacity and data transfer rate of the optical recording medium have been achieved chiefly by a reduction in the size of the laser beam spot. Consequently, in order to achieve a further increase in the capacity and data transfer rate, there is a necessity for decreasing the size of the beam spot. However, if the wavelength of the laser beam is shortened further, absorption of the laser beam in the light-transmitting layer will abruptly increase, or age deterioration of the light-transmitting layer will become greater. For these reasons, further shortening of the wavelength is difficult. Additionally, in consideration of difficulty in the design of a lens, assurance of a tilt margin, or the like, a further increase in the numerical aperture of the objective lens is also difficult. In short, a further reduction in the size of the laser beam spot can be said to be extremely difficult.

With this being the case, an optical recording medium of super-resolution type has recently been put forward as another attempt to achieve increased capacity and a higher data transfer rate. The optical recording medium of super-resolution type refers to an optical recording medium which enables formation of minute record marks, passing a resolution limit, and reproduction of data from these record marks. If such an optical recording medium is used, a greater capacity and a higher data transfer rate can be fulfilled without involvement of a reduction in the size of the beam spot.

By way of more detailed explanation, provided that the wavelength of the laser beam is taken as $\lambda$ and the numerical aperture of the objective lens is taken as NA, a diffraction limit $d_1$ is given by

$$d_1 = \lambda\!\!\Big/\!\!{2NA} \;\; .$$

In an optical recording medium of a type, such as a CD or a DVD, in which data are expressed by the length of a record marks and the length of a blank region; namely, a distance between edges, a resolution limit $d_2$ of a single frequency signal is given by

$$d_2 = \lambda\!\!\Big/\!\!{4NA} \;\; .$$

Specifically, in an ordinary optical recording medium which is not of an super-resolution type, if the length of the shortest record marks or the length of the shortest blank region falls below the resolution limit, discriminating between the record marks and the blank region becomes difficult. In contrast, in the optical recording medium of the super-resolution type, the record marks or the blank region, whose length falls below the resolution limit, can be utilized. Hence, an increased capacity and a higher data transfer rate can be fulfilled without involvement of a reduction in the size of the beam spot.

An optical recording medium of super-resolution type called a "Scattering-type Super Lens (Super RENS)" (Super Resolution Near-field Structure) has hitherto been proposed as the optical recording medium of super-resolution type (see Non-Patent Document 1). A reproduction layer consisting of a phase-change material layer and a metallic oxide is used for this optical recording medium. It is considered that, when exposed to a laser beam, the metallic oxide constituting the reproduction layer is decomposed in a high-energy field in the center of the beam spot and that metallic fine particles resulting from decomposition of the metallic oxide scatter the laser beam, to thus induce near-field light. The explanation for attaining super-resolution is that, since the near-field light is consequently irradiated locally onto the phase-change material layer, super-resolution recording and super-resolution reproduction can be performed by utilization of a phase change. When the laser beam has moved away, metal and oxygen, which have been produced from decomposition of the reproduction layer, are again bound to thus return to the original metallic oxide. Therefore, repeated rewriting is said to be feasible.

However, the research conducted by the present inventors has revealed that the phase change in the phase-change material layer hardly appears as a signal in the optical recording medium of super-resolution type called the "Scattering-type Super RENS," and that decomposition of the reproduction layer is irreversible. Namely, it has become obvious that the optical recording medium of super-resolution type called the "Scattering-type Super RENS" is not a rewritable optical recording medium which enables formation of reversible record marks in the phase-change material layer and that the optical recording medium of super-resolution type can be embodied as a write-once optical recording medium which enables formation of irreversible record marks in a reproduction layer (a noble metal oxide layer) (see Non-Patent Document 2).

The reason why minute record marks, which fall below the resolution limit, can be formed in the noble metal oxide layer is that a noble metal oxide layer is locally decomposed in a high energy field in the center of the beam spot and that the decomposed area becomes plastically deformed by resultant bubble pits. The plastically-deformed area is used as a record marks, and a non-plastically-deformed area is used as a blank region. However, the reason why data can be reproduced from the thus-formed minute record marks has not yet been elucidated.

[Non-Patent Document 1] "A near-field recording and readout technology using a metallic probe in an optical disk," Jap. J. Appl. Phys., the Japan Society of Applied Physics, 2000, Volume 39, pp. 980 to 981.

[Non-Patent Document 2] "Rigid bubble pit formation and huge signal enhancement in super-resolution near-field structure disk with platinum-oxide layer," Applied Physics Letters, American Institute of Physics, December 16, 2002, Volume 81, Number 25, pp. 4697-4699.

As mentioned above, in the currently-proposed optical recording mediums of super-resolution type, an area is locally, plastically deformed by an oxygen gas ($O_2$) produced from decomposition of the noble metal oxide layer, and the thus-deformed area is utilized as a record marks. Consequently, a gas which is of higher chemical stability is considered to be desirable as the gas to be generated. This also applies, in a like manner, to an optical recording medium which is not an optical recording medium of super-resolution type.

Application of the super-resolution technique to the optical recording medium is intended for achieving a greater capacity and a higher data transfer rate. Accordingly, it is considered desirable that data are recorded and reproduced by use of a laser beam having a shorter wavelength and an objective lens having a greater numerical aperture.

<Disclosure of the Invention>

Therefore, the object of the present invention is to provide an optical recording medium which enables formation of record marks by means of generation of a chemically-stable gas, and particularly, an optical recording medium of super-resolution type and a method for manufacturing the same.

Another object of the present invention is to provide a method for recording and reproducing data on and from an optical recording medium of a type in which record marks are formed by means of generation of a chemically-stable gas, through use of a laser beam of shorter wavelength and an objective lens having a greater numerical aperture.

An optical recording medium of the present invention is characterized by comprising a substrate; and a noble metal nitride layer provided on the substrate. In the optical recording medium of the present invention, a laser beam is irradiated on the substrate from a light entrance face, to thus locally decompose the noble metal nitride layer, so that record marks can be formed by means of resultant bubble pits. In this case, a gas filling the bubble pits, which are to form the record marks, is a chemically-stable nitrogen gas ($N_2$). The risk of this gas oxidizing or corroding other layers is very remote, and high storage reliability can be achieved.

Here, the optical recording medium preferably further includes a first dielectric layer provided on a light entrance face side of the substrate when viewed from the noble metal nitride layer; and a second dielectric layer provided on a side of the substrate opposite the light entrance face thereof when viewed from the noble metal nitride layer. So long as the noble metal nitride layer is sandwiched between the first and second dielectric layers, the nitrogen gas ($N_2$) produced from decomposition of the noble metal nitride layer can be stably sealed for a long period of time, so that higher storage reliability can be acquired.

The optical recording medium preferably further includes a light absorption layer and a third dielectric layer, which are provided on a side of the substrate opposite the light entrance face thereof when viewed from the second dielectric layer and arranged in this sequence when viewed from the second dielectric layer. By means of such a structure, the energy of the laser beam irradiated during recording operation is efficiently converted into heat, so that an excellent recording characteristic can be acquired.

Moreover, the optical recording medium preferably further includes a reflection layer provided on a side of the substrate opposite the light entrance face thereof when viewed from the third dielectric layer. So long as such a reflection layer is provided, the intensity of a reproduced signal is enhanced, and reproduction stability is significantly improved. Now, the term "reproduction stability" means resistance to a reproduction deterioration phenomenon; namely, a phenomenon in which the state of the noble metal nitride layer is changed by the energy of the laser beam irradiated during reproducing operation to thus cause an increase in noise and a drop in the number of carriers, thereby decreasing a CNR. The thickness of the reflection layer preferably ranges from 5 nm to 200 nm, more preferably from 10 nm to 150 nm. So long as the thickness of the reflection layer is set as described above, an advantage of a sufficient improvement in reproduction stability can be yielded without involvement of a great drop in productivity.

The noble metal nitride layer preferably contains platinum nitride (PtNx). In this case, most preferably, substantially the entire noble metal nitride layer is formed from platinum nitride (PtNx). However, other materials or impurities which are inevitably mixed may be contained in the noble metal nitride layer. So long as platinum nitride (PtNx) is used as the material of the noble metal nitride layer, a superior signal characteristic and sufficient stability can be acquired.

The optical recording medium preferably further includes a light-transmitting layer which is provided opposite to the substrate when viewed from the first dielectric layer and has the light entrance face. In this case, the thickness of the substrate preferably ranges from 0.6 mm to 2.0 mm; the thickness of the light-transmitting layer preferably ranges from 10 μm to 200 μm; the thickness of the noble metal nitride layer preferably ranges from 2 nm to 75 nm; the thickness of the second dielectric layer preferably ranges from 5 nm to 100 nm; the thickness of the light absorption layer preferably ranges from 5 nm to 100 nm; and the thickness of the third dielectric layer preferably ranges from 10 nm to 140 nm. By means of this structure, super-resolution recording and reproduction can be performed by means of setting $\lambda$/NA to 640 nm or less by use of a laser beam having a wavelength ($\lambda$) of less than about 635 nm and an objective lens having a numerical aperture (NA) of about 0.6-plus. Particularly, a superior characteristic can be acquired through super-resolution recording and super-resolution reproduction involving use of a laser beam, whose wavelength is about 405 nm and which is to be used with an optical recording medium of next generation type, and an objective lens having a numerical aperture of about 0.85.

A method for manufacturing an optical recording medium of the present invention is characterized by comprising a first step of forming on a support substrate, in this sequence, a reflection layer, a third dielectric layer, a light absorption layer, a second dielectric layer, a noble metal nitride layer, and a first dielectric layer; and a second step of forming a light-transmitting layer on the first dielectric layer. According to the present invention, there can be formed an optical recording medium which enables super-resolution recording and reproduction by means of setting $\lambda$/NA to 640 nm or less by use of a laser beam having a wavelength of less than about 635 nm and an objective lens having a numerical aperture of about 0.6-plus. Moreover, in the thus-manufactured optical recording medium, bubble pits formed from a chemically-stable nitrogen gas ($N_2$) are to form record marks. Hence, high storage reliability can be achieved. Processing pertaining to the first step is preferably performed by means of a vapor phase deposition method, and processing pertaining to the second step is preferably performed by means of a spin coating method.

A data recording method of the present invention is a data recording method for recording data on the previously-described optical recording medium, to thus record data by irradiating a laser beam from the light entrance face, characterized in that, when a wavelength of the laser beam is taken as $\lambda$ and a numerical aperture of an objective lens used for focusing the laser beam is taken as NA, a train of record marks, including record marks whose lengths are $\lambda$/4NA or less, is recorded by setting $\lambda$/NA to 640 nm or less. Moreover, a data reproduction method of the present invention is a data reproduction method for reproducing data from the optical recording medium, to thus record data by irradiating a laser beam on the above-described optical recording medium from the light entrance face, characterized in that, when a wavelength of the laser beam is taken as $\lambda$ and a numerical aperture of an objective lens used for focusing the laser beam is taken as NA, data are reproduced from a train of record marks, including record marks whose lengths are $\lambda$/4NA or less, by setting $\lambda$/NA to 640 nm or less. In any case, setting the wavelength of the laser beam to about 405 nm and setting the numerical aperture of the objective lens to about 0.85 is most preferable. By means of these settings, a recording/reproducing device analogous to a recording/reproducing device for use with an optical recording medium of next generation type can be used, and hence cost for developing and manufacturing the recording/reproducing device can be curtailed.

As mentioned above, the optical recording medium of the present invention has a noble metal nitride layer provided on a substrate, and bubble pits stemming from decomposition of the noble metal nitride layer are utilized as record marks. To do this, a gas filling the bubble pits, which are to become record marks, is a chemi-

cally-stable nitrogen gas ($N_2$). Consequently, the risk of the nitrogen gas (N2) filling the bubble pits oxidizing or corroding other layers of the substrate, or the like, is very remote, and high storage reliability can be attained.

Moreover, the optical recording medium of the present invention enables super-resolution recording and reproduction by means of setting $\lambda$/NA to 640 nm or less by use of a laser beam having a wavelength of less than about 635 nm and an objective lens having a numerical aperture of about 0.6-plus. Particularly, a superior characteristic can be acquired through super-resolution recording and super-resolution reproduction involving use of a laser beam, whose wavelength is about 405 nm and which is to be used with an optical recording medium of next generation type, and an objective lens having a numerical aperture of about 0.85. Consequently, a recording/reproducing device analogous to a recording/reproducing device for use with an optical recording medium of next generation type can be used, and hence cost for developing and manufacturing the recording/reproducing device can be curtailed.

**<Brief Description of the Drawings>**

Fig. 1(a) is a cutaway perspective view showing the appearance of an optical recording medium 10 of a preferred embodiment of the present invention, and Fig. 1(b) is an enlarged fragmentary cross-sectional view of section A shown in Fig. 1(a);

Fig. 2 is a view diagrammatically showing a state where the optical recording medium 10 is exposed to a laser beam 40;

Fig. 3 (a) is a plan view showing a beam spot of the laser beam 40 on a noble metal nitride layer 23, and Fig. 3(b) is a view showing the intensity distribution of the beam spot;

Fig. 4 is a view for describing the size of a bubble pit 23a (a record marks);

Fig. 5 is a waveform diagram showing an example intensity modulation pattern of the laser beam 40 achieved during recording operation;

Fig. 6 is a waveform diagram showing another example intensity modulation pattern of the laser beam 40 achieved during recording operation;

Fig. 7 is a graph diagrammatically showing a relationship between the recording power of the laser beam 40 and a CNR of a reproduced signal formed through subsequent reproduction;

Fig. 8 is a graph diagrammatically showing a relationship between the reproducing power of the laser beam 40 and the CNR;

Fig. 9 is a graph showing measurement results acquired in Evaluation 1 of characteristics;

Fig. 10 is a graph showing measurement results acquired in Evaluation 2 of characteristics; and

Fig. 11 is a graph showing measurement results acquired in Evaluation 3 of characteristics.

**<Best Mode for Implementing the Invention>**

Preferred embodiments of the present invention will be described in detail hereunder by reference to the accompanying drawings.

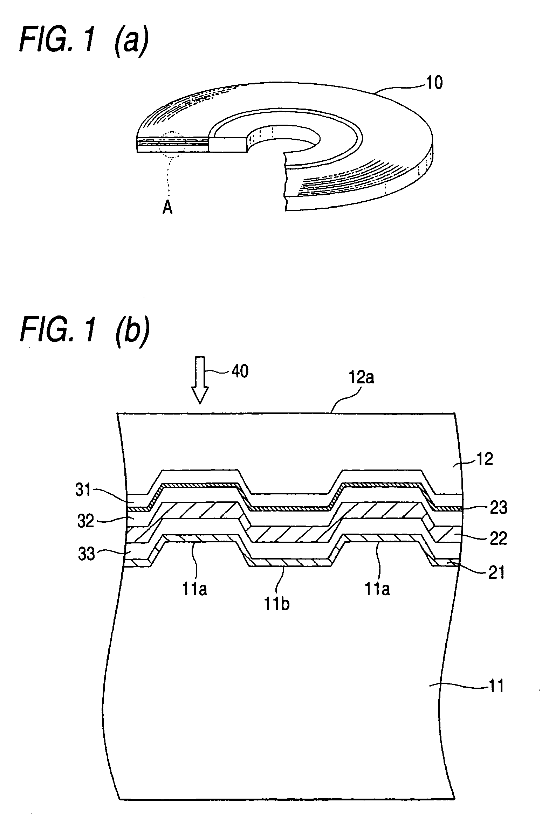

Fig. 1(a) is a cutaway perspective view showing the appearance of an optical recording medium 10 of a preferred embodiment of the present invention, and Fig. 1(b) is an enlarged fragmentary cross-sectional view of section A shown in Fig. 1(a).

As shown in Fig. 1(a), the optical recording medium 10 of the present embodiment assumes the shape of a disc. As shown in Fig. 1(b), the optical recording medium comprises a support substrate 11; a light-transmitting layer 12; a reflection layer 21, a light absorption layer 22, and a noble metal nitride layer 23, which are interposed in this sequence between the support substrate 11 and the light-transmitting layer 12; a dielectric layer 31 interposed between the noble metal nitride layer 23 and the light-transmitting layer 12; a dielectric layer 32 interposed between the light absorption layer 22 and the noble metal nitride layer 23; and a dielectric layer 33 interposed between the reflection layer 21 and the light absorption layer 22. Recording and reproduction of data can be performed by irradiating a laser beam 40 on a light entrance face 12a while the optical recording medium 10 is being rotated. The wavelength of the laser beam 40 can be set to a value of less than 635 nm. Especially, it is most preferable to set the wavelength to a wavelength of about 405 nm used for an optical recording medium of next-generation type. Moreover, a numerical aperture of an objective lens used for focusing the laser beam 40 can be set to a value of 0.6-plus. Particularly, the numerical aperture can be set to a numerical aperture of about 0.85 used for an optical recording medium of next-generation type.

The support substrate 11 is a disc-shaped substrate used for ensuring mechanical strength required by the optical recording medium 10. A groove 11a and a land 11b, which are used for guiding the laser beam 40, are helically formed in one surface of the support substrate from the neighborhood of the center to an outer rim of the substrate, or from the outer rim to the neighborhood of the center. No specific limitations are imposed on the material and thickness of the support substrate 11, so long as sufficient mechanical strength can be ensured. For example, glass, ceramic, resin, and the like can be used as the material of the support substrate 11. In consideration of ease of molding, resin is desirably used. Examples of such resin include polycarbonate resin, olefin resin, acrylic resin, epoxy resin, polystyrene resin, polyethylene resin, polypropylene resin, silicone resin, fluorine-based resin, ABS resin, and urethane resin. Among these resins, polycarbonate resin and olefin resin are especially preferred, in view of ease of processing. Since the support substrate 11 does not become an optical path for the laser beam 40, there is no necessity for selecting a material which exhibits a high light transmission characteristic in the wavelength range.

The thickness of the support substrate 11 is preferably set to a thickness which is required and sufficient to ensure mechanical strength; e.g., a range of 0.6 mm to 2.0 mm. In consideration of interchangeability between the current optical recording medium and the next-generation-type optical recording medium, the thickness is preferably set to a range of 1.0 mm to 1.2 mm, particularly preferably a value of 1.1 mm or thereabouts. Although no specific limitations are imposed on the diameter of the support substrate 11, the diameter is preferably set to about 120 mm, in consideration of interchangeability between the current optical recording medium and the next-generation-type optical recording medium.

The light-transmitting layer 12 is a layer which is to become an optical path for the laser beam 40 irradiated during recording and reproducing operations. No specific limitations are imposed on the material of the light-transmitting layer 12, so long as the material exhibits a sufficiently-high light transmittance in the wavelength range of the employed laser beam 40, and, for instance, a light-transmitting resin or the like can be used. In the optical recording medium 10 of the present embodiment, the thickness of the light-transmitting layer 12 is set to a range of 10 $\mu$m to 200 $\mu$m. The reason for this is that, when the thickness of the light-transmitting layer 12 is less than 10 $\mu$m, the beam size on the light entrance face 12a becomes extremely small, and as a result, flaws or dust on the light entrance face 12a exert excessive influence on recording and reproduction. When the thickness is 200 $\mu$m or higher, difficulty is encountered in assuring a tilt margin or suppressing coma aberration. In consideration of interchangeability between the current optical recording medium and the next-generation-type optical recording medium, the thickness is preferably set to a range of 50 $\mu$m to 150 $\mu$m, particularly preferably a range of 70 $\mu$m to 120 $\mu$m.

The reflection layer 21 plays a role in enhancing the intensity of a reproduced signal and reproduction stability. A single metal, such as gold (Au), silver (Ag), copper (Cu), platinum (Pt), aluminum (A1), titanium (Ti), chromium (Cr), iron (Fe), cobalt (Co), nickel (Ni), magnesium (Mg), zinc (Zn), or germanium (Ge), or an alloy thereof can be used as the material of the reflection layer 21.. No specific limitations are imposed on the thickness of the reflection layer 21. However, the thickness is preferably set to a range of 5 nm to 200 nm, more preferably a range of 10 nm to 150 nm. This is because a sufficient advantage of an improvement in reproduction stability cannot be acquired when the thickness of the reflection layer 21 is less than 5 nm. When the thickness of the reflection layer 21 exceeds 200 nm, film growth entails consumption of much time, which in turn deteriorates productivity, and produces no substantial enhancement of reproduction stability. In contrast, when the thickness of the reflection layer 21 is set to a range of 10 nm to 150 nm, a sufficient advantage of reproduction stability can be achieved without greatly deteriorating productivity. In the present invention, providing the reflection layer 21 on the optical recording medium is not indispensable. However, when the reflection layer is provided, the above-described advantage can be yielded.

The light absorption layer 22 chiefly plays a role in absorbing the energy of the laser beam 40 and converting the thus-absorbed energy into heat. A material, which exhibits high absorption in the wavelength range of the employed laser beam 40 and has comparatively-low hardness so as not to prevent deformation of the noble metal nitride layer 23 during recording, is preferably used as the light absorption layer. A phase-change material used as a material for a recording layer in a rewritable optical recording medium is mentioned as a material which satisfies requirements of the laser beam 40 having a wavelength of less than 635 nm. The phase-change material is preferably an alloy of antimony (Sb), tellurium (Te), or germanium (Ge), or a material formed by addition of additives to one of these alloys.

Specifically, provided that an atomic ratio of phase-change materials forming the light absorption layer 22 is expressed as

$(Sb_aTe_{1-a})_{1-b}MA_b$ or

$\{(GeTe)_c(Sb_2Te_3)_{1-c}\}_dMB_{1-d}$

[where MA denotes elements exclusive of antimony (Sb) and tellurium (Te); and MB denotes elements exclusive of antimony (Sb), tellurium (Te), and germanium (Ge)], the atomic ratio is preferably set to fall within a range such that

$0 \leq a \leq 1$, and $0 \leq b \leq 0.25$ or

$1/3 \leq c \leq 2/3$, and $0.9 \leq d$.

Particularly, when the value of "b" exceeds 0.25, a light absorption coefficient may become lower than the intensity required by the light absorption layer 22, and thermal conductivity may become lower than the value required by the light absorption layer 22, as well. Hence, the value of "b" preferably does not exceed 0.25.

Although no specific limitations are not imposed on the type of the element MA, one element or two or more elements are preferably selected from the group consisting of germanium (Ge), indium (In), silver (Ag), gold (Au), bismuth (Bi), selenium (Se), aluminum (A1), phosphor (P), hydrogen (H), silicon (S), carbon (C), vanadium (V), tungsten (W), tantalum (Ta), zinc (Zn), manganese (Mn), titanium (Ti), tin (Sn), palladium (Pd), lead (Pb), nitrogen (N), oxygen (0), and rare-earth metals [scandium (Sc), yttrium (Y), and lanthanoids]. Particularly, when a laser beam having a wavelength of 390 nm to 420 nm is used, the element MA is preferably one element or two or more elements from the group consisting of silver (Ag), germanium (Ge), indium (In), and rare-earth elements. As a result, a superior signal characteristic can be acquired when a laser beam having a wavelength of 390 nm to 420 nm, particularly a laser beam having a wavelength of about 405 nm, is used.

Although no specific limitations are not imposed on the type of the element MB, one element or two or more elements are preferably selected from the group consisting of indium (In), silver (Ag), gold (Au), bismuth (Bi), selenium (Se), aluminum (Al), phosphor (P), hydrogen (H), silicon (S), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O), and rare-earth metals [scandium (Sc), yttrium (Y), and lanthanoids]. Particularly, when a laser beam having a wavelength of 390 nm to 420 nm is used, the element MB is preferably one element or two or more elements from the group consisting of silver (Ag), indium (In), and rare-earth elements. As a result, a superior signal characteristic can be acquired when a laser beam having a wavelength of 390 nm to 420 nm, particularly a laser beam having a wavelength of about 405 nm, is used.

Even when a phase-change material is used as the material of the light absorption layer 22, a phase change due to recording hardly appears as a signal. This is the reason why using the phase-change material as the material of the light absorption layer 22 is not indispensable. However, the inventors have ascertained that the best signal characteristic is acquired when the phase-change material is used as the material of the light absorption layer 22, particularly a phase-change material which has the above-described composition.

When the phase-change material is used as the material of the light absorption layer 22, the thickness of the same is preferably set to a range of 50 nm to 100 nm, more preferably a range of 10 nm to 80 nm, and most preferably a range of 10 nm to 60 nm. The reason for this is that, when the thickness of the light absorption layer 22 is less than 5 nm, sufficient absorption of energy of the laser beam may fail to be attained, and when the thickness of the light absorption layer exceeds 100 nm, film growth involves consumption of much time and productivity drops. In contrast, when the thickness of the light absorption layer 22 is set to a range of 10 nm to 80 nm, particularly a range of 10 nm to 60 nm, the energy of the laser beam 40 can be sufficiently absorbed while high productivity is ensured.

In the present invention, providing the optical recording medium with the light absorption layer 22 is not indispensable. However, as mentioned previously, highly-efficient conversion of the energy of the laser beam 40 into heat can be attained as a result of provision of the light absorption layer.

The noble metal nitride layer 23 is a layer where a record marks is formed upon exposure to the laser beam 40, and contains a noble metal nitride as the principal constituent. Although no specific limitations are imposed on the type of noble metal, at least one among platinum (Pt), silver (Ag), and palladium (Pd) is preferable. Platinum (Pt) is particularly preferable. Specifically, platinum nitride (PtNx) is particularly preferable as the material of the noble metal nitride layer 23. Acquisition of a superior signal characteristic and sufficient stability becomes possible, so long as platinum nitride (PtNx) is used as the material of the noble metal nitride layer 23. When platinum nitride (PtNx) is used as the material of the noble metal nitride layer 23, the value of "x" is preferably set such that an extinction coefficient (k) becomes smaller than 3 (k<3) within the wavelength range of the employed laser beam 40.

The thickness of the noble metal nitride layer 23 exerts great influence on the signal characteristic. In order to achieve a superior signal characteristic, the thickness of the noble metal nitride layer is preferably set to a range of 2 nm to 75 nm, more preferably a range of 2 nm to 50 nm. Particularly, in order to acquire a superior signal characteristic for a signal of the diffraction limit or less, the thickness of the noble metal nitride layer is preferably set to a range of 2 nm to 15 nm. In a case where the thickness of the noble metal nitride layer 23 is smaller than 2 nm or in excess of 75 nm, a record marks having a superior geometry cannot be formed even when the noble metal nitride layer is exposed to the laser beam 40, and a sufficient carrier-to-noise ratio (CNR) may fail to be acquired. In contrast, so long as the thickness of the noble metal nitride layer 23 is set to a range of 2 nm to 15 nm, a superior CNR can be acquired in connection with a signal of diffraction limit or less as well as to a signal of a diffraction limit or more.

The dielectric layers 31, 32, and 33 chiefly play a role in physically and chemically protecting respective adjacent layers and adjusting an optical characteristic. Throughout the specification and the claims, the dielectric layers 31, 32, and 33 are often called a first dielectric layer, a second dielectric layer, and a third dielectric layer, respectively. Oxides, sulfides, nitrides, or combinations thereof are used as the principal constituent of materials for the dielectric layers 31, 32, and 33. Specifically, oxides, nitrides, sulfides, or carbides of aluminum (Al), silicon (Si), cerium (Ce), titanium (Ti), zinc (Zn), or tantalum (Ta), such as $Al_2O_3$, AlN, ZnO, ZnS, GeN, GeCrN, $CeO_2$, SiO, $SiO_2$, $Si_3N_4$, SiC, $La_2O_3$, TaO, $TiO_2$ SiAlON (mixtures of $SiO_2$, $Al_2O_3$, $Si_3N_4$, and AlN), LaSiON (mixtures of $La_2O_3$, $SiO_2$, and $Si_3N_4$, or the like), or mixtures thereof are preferably used. Particularly, use of a mixture consisting of ZnS and $SiO_2$ is more preferable. In such a case, a ratio of ZnS is preferably set to a range of 70 mol percent to 90 mol percent; a ratio of $SiO_2$ is preferably set to a range of 10 mol percent to 30 mol percent; and a mol ratio of ZnS to $SiO_2$ is most preferably set to about 80:20.

The dielectric layers 31, 32, and 33 may be formed from the same material, or some or all of them may be formed from different materials. Moreover, at least one of the dielectric layers 31, 32, and 33 may be formed from a multilayer structure comprising a plurality of layers.

The thickness of the dielectric layer 33 is preferably set to a range of 10 nm to 140 nm, more preferably to a range of 20 nm to 120 nm. The reason for this is that, when the thickness of the dielectric layer 33 is smaller than 10 nm, there arises a fear of a failure to sufficiently protect the light absorption layer 22, and that, when the thickness of the dielectric layer 33 exceeds 140 nm, productivity is deteriorated as a result of film growth involving consumption of much time. In contrast, so long as the thickness of the dielectric layer 33 is set to a range of 20 nm to 120 nm, the light absorption layer 22 can be effectively protected while high productivity is ensured. However, when the optical recording medium is not provided with the light absorption layer 22, the dielectric layer 33 can be omitted.

The thickness of the dielectric layer 32 is preferably set to a range of 5 nm to 100 nm, more preferably a range of 20 nm to 100 nm. The reason for this is that when the thickness of the dielectric layer 32 is smaller than 5 nm, the dielectric layer 32 may be broken during decomposition of the noble metal nitride layer 23, to thus fail to protect the noble metal nitride layer 23, and when the thickness of the dielectric layer 32 exceeds 100 nm, the noble metal nitride layer 23 may fail to be sufficiently deformed during recording. In contrast, so long as the thickness of the dielectric layer 32 is set to a range of 20 nm to 100 nm, the dielectric layer does not excessively hinder deformation of the noble metal nitride layer 23, which arises during recording operation, while sufficiently protecting the same. Further, the thickness of the dielectric layer 32 also affects the signal characteristic acquired during reproduction of data. A high CNR can be acquired, so long as the thickness of the dielectric layer 32 is set to a range of 50 nm to 70 nm, particularly to a value of about 60 nm.

The essential requirement is to set the thickness of the dielectric layer 31 according to required reflectivity, so long as the noble metal nitride layer 23 can be sufficiently protected. For instance, the thickness of the dielectric layer 31 is preferably set to a range of 30 nm to 120 nm, more preferably a range of 50 nm to 100 nm, and most preferably a value of about 70 nm. The reason for this is that, when the thickness of the dielectric layer 31 is smaller than 30 nm, there may arise a case where the noble metal nitride layer 23 cannot be sufficiently protected, and, when the thickness of the dielectric layer 31 1 exceeds 120 nm, productivity is deteriorated as a result of film growth involving consumption of much time. In contrast, so long as the thickness of the dielectric layer 31 is set to a range of 50 nm to 100 nm, particularly to a value of about 70 nm, the noble metal nitride layer 23 can be sufficiently protected while high productivity is ensured.

The above describes the structure of the optical recording medium 10.

Manufacture of the optical recording medium 10 having such a structure is achieved by initially preparing the support substrate 11; and sequentially forming the reflection layer 21, the dielectric layer 33, the light absorption layer 22, the dielectric layer 32, the noble metal nitride layer 23, the dielectric layer 31, and the light-transmitting layer 12 on the face of the support substrate 11 where the grooves 11a and the lands 11b are formed. Specifically, during manufacture of the optical recording medium 10, films are sequentially formed from the face opposite the light entrance face 12a, as in the case of the optical recording medium of next-generation type.

The reflection layer 21, the dielectric layer 33, the light absorption layer 22, the dielectric layer 32, the noble metal nitride layer 23, and the dielectric layer 31 can be formed by vapor phase deposition using chemical species containing constituent elements thereof; for example, by sputtering or vacuum evaporation. Above all, using sputtering is preferable. Meanwhile, the light-transmitting layer 12 can be formed by forming a coating from, e.g., an acrylic or epoxy-based ultraviolet cure resin whose viscosity has been adjusted, by means of the spin-coating method, and exposing the coating to ultraviolet irradiation in a nitrogen atmosphere to thus cure the coating. Alternatively, the light-transmitting layer 12 may be formed by, rather than the spin-coating method, from a light-transmitting sheet containing light-transmitting resin as the principal constituent and various bonding agents and pressure-sensitive adhesives.

A hard coating layer may be provided on the surface of the light-transmitting layer 12, thereby protecting the surface thereof. In this case, the surface of the hard coating layer forms the light entrance surface 12a. For instance, ultraviolet cure resin containing an epoxy acrylate oligomer (bifunctional oligomer), multifunctional acrylic monomer, monofunctional acrylic monomer, and a photopolymerization initiator; or oxides, nitrides, sulfides, or carbides of aluminum (Al), silicon (Si), cerium (Ce), titanium (Ti), zinc (Zn), tantalum (Ta), or mixtures thereof are used as a material for the hard coating layer. When an ultraviolet cure resin is used as a material of the hard coating layer, the ultraviolet cure resin is preferably formed over the light-transmitting layer 12 by the spin-coating method. When the oxides, nitrides, sulfides, carbides, or mixtures thereof are used, vapor phase deposition using chemical species including the above-described constituent elements; for example, sputtering or vacuum deposition, can be employed. Among others, use of sputtering is preferable.

Since the hard coating layer plays a role in preventing infliction of flaws on the light entrance face 12a, the hard coating layer preferably has lubricity as well as hardness.

In order to impart lubricity to the hard coating layer, an effective measure is incorporate a lubricant into a material (e.g., $SiO_2$) which is to become a base material of the hard coating layer. The lubricant is preferably a silicon-based lubricant, a fluorine-based lubricant, or a fatty-acid-ester-based lubricant. The lubricant content is preferably set to a range of 0.1 mass percent to 5.0 mass percent.

The method for and principle employed in recording data on the optical recording medium 10 of the present embodiment will now be described.

Data are recorded on the optical recording medium 10 by exposing the noble metal nitride layer 23 to the laser beam 40 having a wavelength of less than 63 5 nm, preferably a wavelength of about 405 nm used for an optical recording medium of next generation type, by way of the light entrance face 12a while the optical recording medium 10 is being rotated. In this case, an objective lens having a numerical aperture of 0.6-plus, particularly, an objective lens which is used for an optical recording medium of next generation type and has a numerical aperture of about 0.85, can be used as the objective lens for focusing the laser beam 40. Specifically, data can be recorded by use of an optical system analogous to the optical system used for the optical recording medium of next generation type.

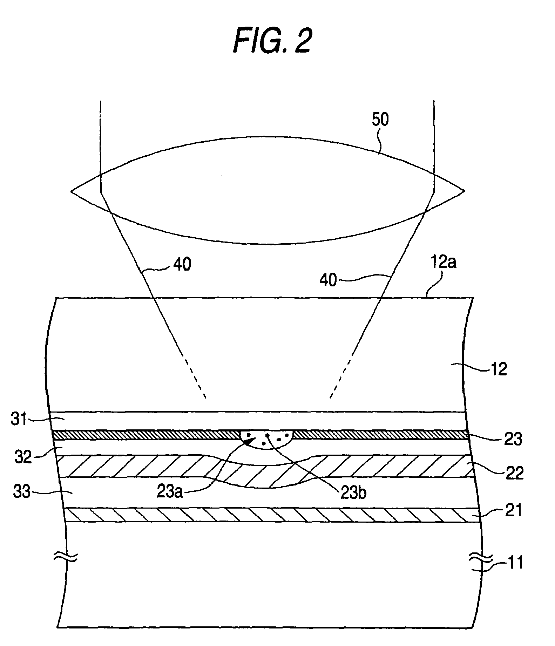

Fig. 2 is an essential cross-sectional view diagrammatically showing the state of the optical recording medium 10 exposed to the laser beam 40. The cross section of the optical recording medium 10 shown in Fig. 2 corresponds to a cross section taken along the groove 11a and the land 11b.

As shown in Fig. 2, the laser beam 40 having the above-described wavelength is focused by an objective lens 50 having the above-described numerical aperture, and is irradiated onto the optical recording medium 10, whereupon the noble metal nitride layer 23 is decomposed in the center of the beam spot, and bubble pits 23a filled with a nitrogen gas ($N_2$) are generated. Fine particles 23b of raw metal are dispersed in the bubble pits 23a. At this time, layers existing around the bubble pits 23a are plastically deformed by pressure in the bubble pits, and hence the bubble pits 23a can be used as irreversible record marks. For example, when the material of the noble metal nitride layer 23 is a platinum nitride (PtNx), the platinum nitride (PtNx) decomposes into platinum (Pt) and a nitrogen gas ($N_2$) in the center of the beam spot, whereby platinum (Pt) fine particles are dispersed in the bubble pits 23a. Of the noble metal nitride layer 23, areas where no bubble pits 23a are generated act as blank regions. Since the nitrogen gas ($N_2$) produced from decomposition has high chemical stability, the chance of the nitrogen gas oxidizing or corroding other layers is very remote, and therefore high storage reliability can be achieved.

Decomposition of the noble metal nitride layer 23 does not arise in the area corresponding to the entirety of the beam spot. As mentioned previously, decomposition arises solely in the center of the beam spot. Consequently, the thus-generated bubble pits 23a (record marks) are smaller than the beam spot, whereby super-resolution recording is fulfilled. The reason why such super-resolution recording can be carried out is as follows:

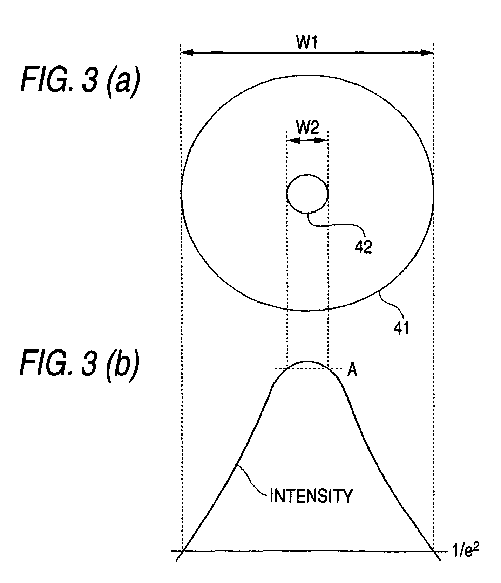

Fig. 3(a) is a plan view showing a beam spot of the laser beam 40 on the noble metal nitride layer 23, and Fig. 3(b) is a view showing the intensity distribution of the beam spot.

As shown in Fig. 3(a), the plane geometry of the beam spot 41 is essentially circular. However, the intensity distribution of the laser beam 40 in the beam spot 41 is not uniform, but assumes a Gaussian distribution as shown in Fig. 3(b). Specifically, energy becomes greater with increased proximity to the center in the beam spot 41. Consequently, so long as a predetermined threshold value A is set so as to sufficiently exceed $1/e^2$ of the maximum intensity, a diameter W2 of a region 42-where intensity greater than the threshold-value A is achieved-becomes sufficiently smaller than the diameter W1 of the beam spot 41. This implies that, so long as the noble metal nitride layer 23 has a characteristic of being decomposed upon exposure to the laser beam 40 having intensity greater than the threshold value A, the bubble pits 23 a (record marks) are selectively formed in only an area of the region exposed to the laser beam 40, the area corresponding to the region 42 in the beam spot 41.

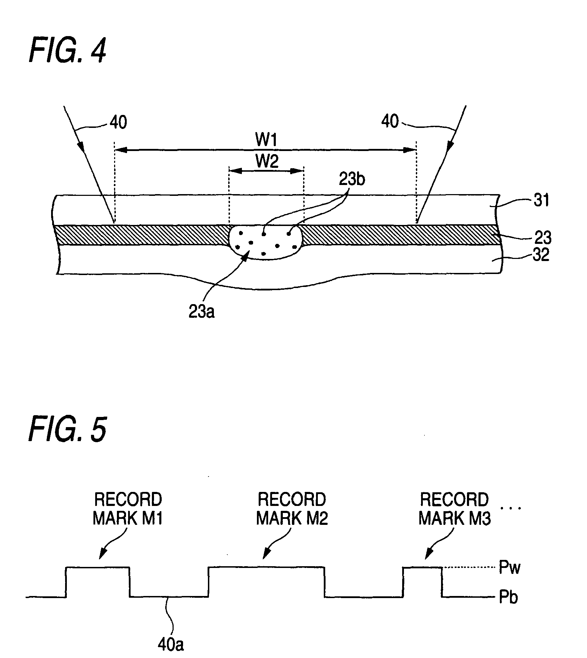

Thereby, as shown in Fig. 4, the bubble pits 23a (record marks), which are sufficiently smaller than the diameter W1 of the beam spot, can be formed in the noble metal nitride layer 23, and the diameter of the bubble pits becomes essentially equal to W2. Specifically, the relationship between the diameter W2 of the apparent beam spot and the diameter W1 of the actual beam spot becomes W1 > W2, so that super-resolution recording is fulfilled.

Therefore, so long as the laser beam 40 having modified intensity is irradiated onto the optical recording medium 10 along the groove 11a and/or land 11b while the optical recording medium 10 is being rotated, minute record marks, which are smaller than the resolution limit, can be formed in desired locations on the noble metal nitride layer 23.

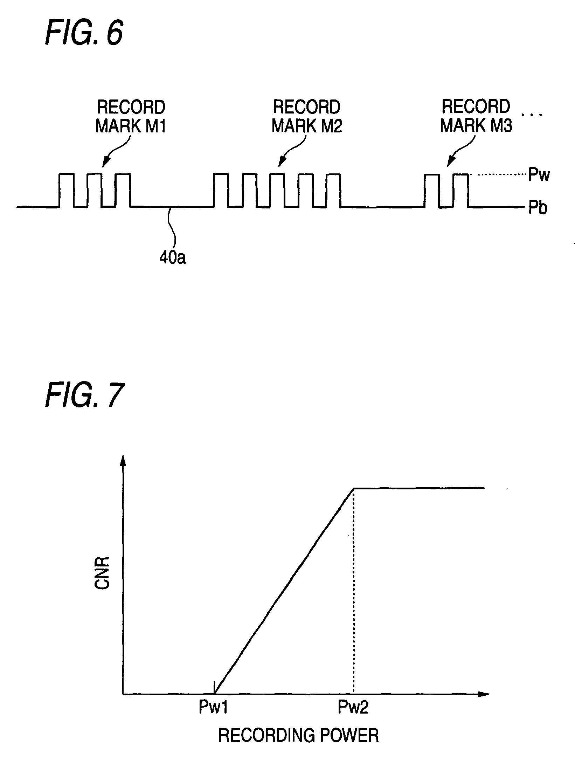

Fig. 5 is a waveform chart showing an example of an intensity modulation pattern of the laser beam 40 acquired during recording operation. As shown in Fig. 5, intensity 40a of the laser beam 40 required during recording operation is set to recording power (= Pw) in regions where record marks M1, M2, M3, ... are to be formed, and is set to base power (= Pb) in regions (blank regions) where no record marks are to be formed. As a result, the bubble pits 23a are formed through decomposition in the regions exposed to the laser beam 40 having recording power Pw in the noble metal nitride layer 23. Accordingly, the record marks M1, M2, M3, ..., each having a desired length, can be formed. An intensity modulation pattern of the laser beam 40 acquired during recording operation is not limited to that shown in Fig. 5. For instance, as shown in Fig. 6, the record marks M1, M2, M3, ... may be formed through use of divided pulse trains.

Fig. 7 is a graph diagrammatically showing a relationship between recording power of the laser beam 40 and the CNR of a reproduced signal obtained through subsequent reproducing operation.

As shown in Fig. 7, provided that the recording power of the laser beam 40 is less than Pw1, an effective reproduced signal is not obtained from the optical recording medium 10 even when reproducing operation is performed subsequently. A conceivable reason for this is that, when the recording power of the laser beam 40 is less than Pw1, the noble metal nitride layer 23 is not substantially decomposed. In the region where the recording power of the laser beam 40 is Pw1 to less than Pw2 (> Pw1), a higher CNR is acquired through subsequent reproducing operation as recording power is greater. A conceivable reason for this is that decomposition of the noble metal nitride layer 23 has partially arisen in the regions where the recording power of the laser beam 40 is Pw1 to less than Pw2, and that the extent of decomposition becomes greater as the recording power becomes greater. In the region where the recording power of the laser beam 40 is Pw2 or higher, no substantial changes arise in the CNR obtained through subsequent reproducing operation even when the recording power is increased further. A conceivable reason for this is that, when the recording power of the laser beam 40 is Pw2 or higher, the noble metal nitride layer 23 is substantially completely decomposed. In consideration of the above-mentioned reasons, setting the recording power of the laser beam 40 to Pw2 or higher can be said to be preferable.

The value of Pw2 changes according to the structure (materials or thicknesses of the respective layers, or the like) of the optical recording medium 10 or recording requirements (a recording linear velocity, the wavelength of the laser beam 40, and the like). When the recording linear velocity is 6.0 m/s or thereabouts, the wavelength of the laser beam 40 is about 405 nm, and the numerical aperture of the objective lens 50 is about 0.85, there is achieved
7.0 mW≤Pw2≤11.0 mW, and
there is also achieved

$$Pw1 \times 1.4 \leq Pw2 \leq Pw1 \times 2.0$$

in connection with Pw1.

In actual setting of recording power, the recording power is preferably set to a value which is higher than Pw2 by 0.3 mW or more, in consideration of variations in manufacture of the optical recording medium 10, fluctuations in the power of the laser beam 40, and the like. This is because no actual damage arises even when the actual recording power is higher than Pw2, and a sufficient margin on Pw2 should be ensured. However, recording power which is higher than required is wasteful, and hence there is no necessity for setting the recording power to a value which is higher than Pw2 by 2.0 mW or more. As mentioned above, the only requirement can be said to be setting the actual recording power to 7.3 mW (= 7.0 mW + 0.3 mW) to 13.0 mW (= 11.0 mW + 2.0 mW).

The above-mentioned are the method for and principle employed in recording data on the optical recording medium 10.

When the thus-recorded data are reproduced, the essential requirement is to irradiate the laser beam 40 whose intensity is fixed to a predetermined intensity (reproducing power = Pr) onto the optical recording medium 10 along the groove 11a and/or land 11b while the optical recording medium 10 is being rotated. An electrical signal corresponding to a train of record marks can be acquired so long as the obtained reflected light is subjected to photoelectric conversion. The reason why such super-resolution reproduction is feasible is not necessarily evident. An inferred reason for this is that, when the laser beam 40 set to reproducing power is irradiated, some type of interaction arises between the laser beam 40 and the fine metal particles 23b present in the bubble pits 23a, to thus enable super-resolution reproduction.

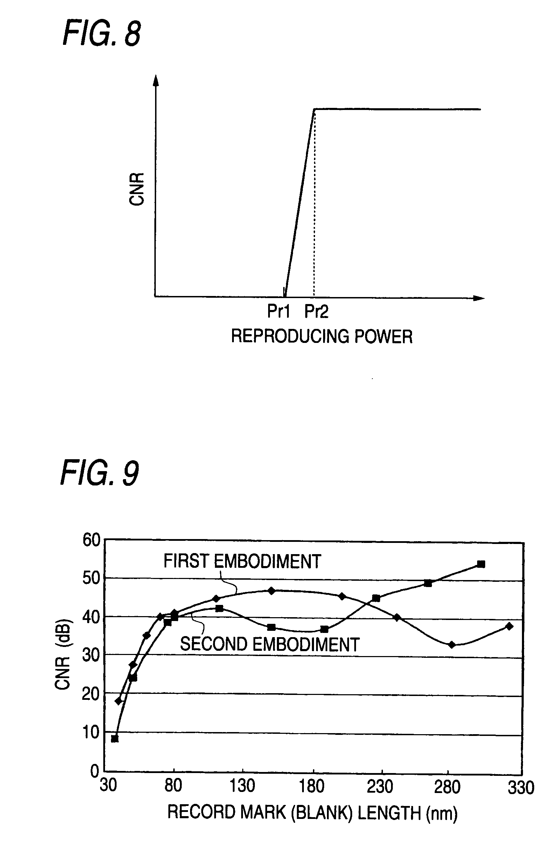

Fig. 8 is a graph diagrammatically showing a relationship between the reproducing power of the laser beam 40 and the CNR.

As shown in Fig. 8, when the reproducing power of the laser beam 40 is under Pr1, an effective reproduced signal is hardly obtained. However, when the reproducing power is set to Pr1 or higher, the CNR rapidly increases. When the reproducing power is increased to Pr2 (> Pr1), the CNR becomes saturated. The reason for occurrence of such a phenomenon is not necessarily evident. An inferred reason for this is that interaction between the fine metal particles 23b and light arises or becomes noticeable as a result of irradiation of the laser beam 40 set to Pr1 or higher. Therefore, the reproducing power of the laser beam 40 must be set to Pr1 or higher and, preferably, the reproducing power is set to Pr2 or higher.

However, if the reproducing power is set too high, decomposition of the noble metal nitride layer 23 may arise in the blank regions. When such decomposition has arisen, significant reproduction deterioration will arise or data loss may arise in some cases. In consideration of this point, the reproducing power of the laser beam 40 is preferably set to Pr2 to less than Pw1.

The value of Pw2 changes according to the structure (materials or thicknesses of the respective layers, or the like) of the optical recording medium 10 or reproduction requirements (a reproduction linear velocity, the wavelength of the laser beam 40, and the like). When the reproduction linear velocity is 6.0 m/s or thereabouts, the wavelength of the laser beam 40 is about 405 nm, and the numerical aperture of the objective lens 50 is about 0.85, there is achieved
1.0 mW≤Pr2≤3.0 mW, and
there is also achieved

$$Pr1 \times 1.05 \leq Pr2 \leq Pr1 \times 1.6$$

in connection with Pr1.

In actual setting of reproducing power, the reproducing power is preferably set to a value which is higher than Pr2 by 0.1 mW to 0.3 mW This is because, when the reproducing power exceeds Pr2, no improvement arises in the CNR even if the reproducing power is increased further, and reproduction deterioration is likely to arise. For this reason, the actual reproducing power should be set to an intensity which is slightly higher than Pr2, in order to suppress occurrence of reproduction deterioration. Under normal conditions, fluctuations in the power of the laser beam 40 in the range where an output of 1 mW to 3 mW is achieved are less than 0.1 mW Therefore, even in consideration of variations in the manufacture of the optical recording medium, or the like, setting reproducing power so as to become higher than Pr2 by 0.1 mW to 0.3 mW is considered to be sufficient. Therefore, actual reproducing power can be said to be set to 1.1 mW (= 1.0 mW + 0.1 mW) to 3.3 mW (= 3.0 mW + 0.3 mW).

Reproducing power of the conventional optical recording medium usually ranges from 0.1 mW to 0.5 mW or thereabouts. Even in the case of an optical recording medium of next-generation-type having a two-layer recording face on one side, reproducing power is rarely set in excess of about 0.8 mW In consideration of this fact, the intensity of reproducing power employed in the present embodiment is understood to be considerably higher than that employed for the conventional optical recording medium.

In connection with actual recording power, actual reproducing power is preferably set to

$$Pw \times 0.1 \leq Pr \leq Pw \times 0.5,$$

more preferably to

$$Pw \times 0.1 \leq Pr \leq Pw \times 0.4 \ .$$

From these relationships, the intensity of reproducing power employed in the present embodiment is considered to be significantly higher than that employed for the conventional optical recording medium.

Values which are to be actually set as the recording power and the reproducing power are preferably stored in the optical recording medium 10 as "Setting Information." So long as such setting information is stored in the optical recording medium 10, the setting information is read by an optical recording/reproducing device when the user actually records or reproduces data, so that the recording power and the reproducing power can be set on the basis of the thus-read setting information.

More preferably, the setting information includes information required to specify various requirements (the linear velocity or the like) which are necessary for recording and reproducing data on and from the optical recording medium 10, as well as including the recording power and the reproducing power. The setting information may also be information recorded in the form of wobbles or pre-pits, or data recorded in the noble metal nitride layer 23. Moreover, the setting information may also be information which is used for indirectly specifying recording power and reproducing power by designating any of various requirements previously stored in the optical recording/reproducing device, as well as information which directly shows various requirements required to record and reproduce data.

As has been described, the optical recording medium of the present embodiment has the noble metal nitride layer 23 and the dielectric layers 31, 32 with the noble metal nitride layer sandwiched therebetween. Accordingly, super-resolution recording and reproduction can be performed with $\lambda$/NA being set to 640 nm or less by use of a laser beam having a wavelength of less than about 635 nm and an objective lens having a numerical aperture of about 0.6-plus. Particularly, a superior characteristic can be achieved during super-resolution recording and reproduction which involve use of the laser beam, which has a wavelength of about 405 nm and is to be used for an optical recording medium of next-generation-type, and an objective lens having a numerical aperture of about 0.85. Consequently, a recording/reproducing device analogous to that for use with an optical recording medium of next-generation-type can be used. Therefore, cost for development and manufacture of the recording/reproducing device can be reduced. The gas filling the bubble pits 23a, which are to become record marks, is a chemically-stable nitrogen gas ($N_2$). Therefore, the risk of the gas oxidizing or corroding other layers is very remote, and hence high storage reliability can also be realized.

Needless to say, the present invention is not limited to the above-described embodiments and is susceptible to various modifications within the scope of the invention described in claims, and the modifications fall within the scope of the present invention.

For instance, the structure of the optical recording medium 10 shown in Fig. 1 is a mere preferred structure of the optical recording medium of the present invention, and the structure of the optical recording medium of the present invention is not limited to that structure. For instance, another noble metal nitride layer may be provided on a portion of the optical recording medium closer to the support substrate 11 when viewed from the light absorption layer 22, or another light absorption layer may be added to a portion of the optical recording medium closer to the light-transmitting layer 12 when viewed from the noble metal nitride layer 23. Further, although the optical recording medium 10 shown in Fig. 1 has a structure which is highly compatible with a so-called optical recording medium of next-generation-type, the optical recording medium can also be provided with a structure which is highly compatible with a so-called optical recording medium of DVD type or an optical recording medium of CD type.

Moreover, various functional layers, such as the light absorption layer 22, the noble metal nitride layer 23, and the like, are provided on both sides of the support substrate 11, thereby realizing a structure having recording faces on both sides. Alternatively, there can be realized a structure having a recording surface of two or more layers on a single side by stacking various functional layers into two or more layers on one side of the support substrate 11 by way of a transparent intermediate layer.

In the present embodiment, super-resolution recording and reproduction are performed by use of the laser beam having a wavelength of less than about 635 nm and an objective lens having a numerical aperture of about 0.6-plus. However, using such a laser beam and the objective lens is not indispensable for recording or reproducing data on or from the optical recording medium of the present invention. Recording or reproduction may be performed through use of a laser beam having a wavelength of about 635 nm or more and/or an objective lens having a numerical aperture of about 0.6 or less. Using the laser beam having a wavelength of less than about 635 nm and the objective lens having a numerical aperture of about 0.6-plus is preferable, because more fine record marks can be formed. Further, in the present invention, utilizing the record marks and the blank regions, which are of less than the resolution limit, is not indispensable. Data may be recorded and reproduced by use of only the record marks and the blank regions which are of greater than the resolution limit. In short, performing the super-resolution recording and reproduction is not indispensable. However, the optical recording medium of the present invention intrinsically enables super-resolution recording and reproduction. Therefore, it is preferable to achieve greater capacity and a higher data transfer rate by means of utilizing the record marks and the blank regions, which are of less than the resolution limit.

In the present embodiment, the noble metal nitride layer 23 is sandwiched between the dielectric layers 31, 32. However, when excessive deformation of the marks sections formed through decomposition of the noble metal nitride layer 23 can be suppressed, one or both of the dielectric layers 31, 32 can be omitted.

(Embodiments)

Embodiments of the present invention will be described hereunder. However, the present invention is not limited to the embodiments.

[Manufacture of samples]

First Embodiment

An optical recording medium sample having the same structure as that of the optical recording medium 10 shown in Fig. 1 was manufactured by the following method.

First, the disc-shaped support substrate 11, which has a thickness of about 1.1 mm, a diameter of about 120 mm, and the grooves 11a and the lands 11b formed in a front face of the substrate, was formed from polycarbonate by means of injection molding.

Next, the support substrate 11 was set in a sputtering system. In the side of the support substrate where the groove 11a and the land 11b are formed, there were sequentially formed the reflection layer 21 which is formed essentially from platinum (Pt) and has a thickness of about 20 nm; the dielectric layer 33 which is formed essentially from a mixture consisting of ZnS and $SiO_2$ (a mol ratio of about 80:20) and has a thickness of about 80 nm; the light absorption layer 22 which is formed essentially from $Ag_aIn_bSb_cTe_d$ (a = 5.9, b = 4.4, c = 61.1, d = 28.6) and has a thickness of about 60 nm; the dielectric layer 32 which is formed essentially from a mixture consisting of ZnS and $SiO_2$ (a mol ratio of about 80:20) and has a thickness of about 60 nm; the noble metal nitride layer 23 which is formed essentially from a platinum nitride (PtNx) and has a thickness of about 2 nm; and the dielectric layer 31 which is formed essentially from a mixture consisting of ZnS and $SiO_2$ (a mol ratio of about 80:20) and has a thickness of about 70 nm by means of sputtering.

Here, at the time of formation of the noble metal nitride layer 23, platinum (Pt) was used as a target, and a nitrogen gas ($N_2$) and an argon gas (Ar) were used as a sputtering gas (a flow ratio of 1:1). Internal pressure of a chamber was set to 0.72 Pa, and sputtering power was set to 100 W An extinction coefficient (k) of the platinum nitride (PtNx), which has been formed under the settings, with respect to light having a wavelength of about 405 nm was about 1.74.

The dielectric layer 31 was coated with an acrylic ultraviolet cure resin by means of spin coating, and the coating was exposed to ultraviolet irradiation, to thus form the light-transmitting layer 12 having a thickness of about 100 $\mu$m. Thus, the optical recording medium sample of the first embodiment was completed.

Second Embodiment

The thickness of the dielectric layer 33 was set to about 100 nm, and the thickness of the noble metal nitride layer 23 was set to about 4 nm. In other respects, an optical recording medium sample of a second embodiment was produced in the same manner as was the optical recording medium sample of the first embodiment.

[First Evaluation of Characteristic]

First, the optical recording medium sample of the first embodiment and that of the second embodiment were set in an optical disk evaluation system (DDU1000 manufactured by Pulstec Industrial Co., Ltd.). While the optical recording medium was being rotated at a linear velocity of about 6.0 m/s, a laser beam having a wavelength of about 405 nm was irradiated onto the noble metal nitride layers 23 from the light entrance faces 12a by way of an objective lens having a numerical aperture of about 0.85, to thus record a single frequency signal having a predetermined record mark length and a blank length. The record mark length and the blank length were set to various values within a range of 37.5 nm to 320 nm. When the above-described optical system was used, a resolution limit given by the following equation is about 120 nm.

$$d_2 = \lambda/4NA$$

In relation to the power of the laser beam 40 employed during recording operation, recording power (Pw) of the laser beam was set to an intensity (optimal recording power) at which the highest CNR is achieved in any of the optical recording medium samples. The base power (Pb) was set to substantially 0 mW. A pattern shown in Fig. 5 was used as a pulse pattern for the laser beam 40.

The thus-recorded single frequency signal was reproduced, and a CNR of the reproduced signal was measured. The reproducing power (Pr) of the laser beam 40 was set to an intensity (optimum reproducing power) at which the highest CNR is acquired in the respective optical recording medium samples. In relation to the optical recording medium sample 1, optimum recording power of 8.5 mW and optimum reproducing power of 2.4 mW were obtained. In relation to the optical recording medium sample 2, optimum recording power of 10.0 mW and optimum reproducing power of 2.4 mW were obtained.

Fig. 9 shows measurement results of CNRs.

As shown in Fig. 9, in any of the optical recording medium samples of the first and second embodiments, high CNRs can be ascertained to have been obtained even when the record mark length and the blank length are smaller than the resolution limit (about 120 nm). For instance, even in a case where the record mark length and the blank length are 80 nm, a CNR of about 41 dB is obtained from the optical recording medium sample of the first embodiment, and a CNR of about 40 dB is obtained from the optical recording medium sample of the second embodiment. As a result, it was ascertained that super-resolution recording and super-resolution reproduction are possible, so long as the optical recording medium samples of the first and second embodiments are used.

[Second evaluation of a characteristic]

Next, optical recording medium samples of the first and second embodiments were set in the above-described optical disk evaluation system. Under the same conditions as those used for the above-described "First evaluation of a characteristic," a single frequency signal whose record mark length and blank length are 80 nm was recorded. In relation to the recording power (Pw) of the laser beam 40 employed during recording operation, recording power was set to various values within a range of 6.0 mW to 10.5 mW. The base power (Pb) was set to substantially 0 mW. The pattern shown in Fig. 5 was used as a pulse pattern for the laser beam 40.

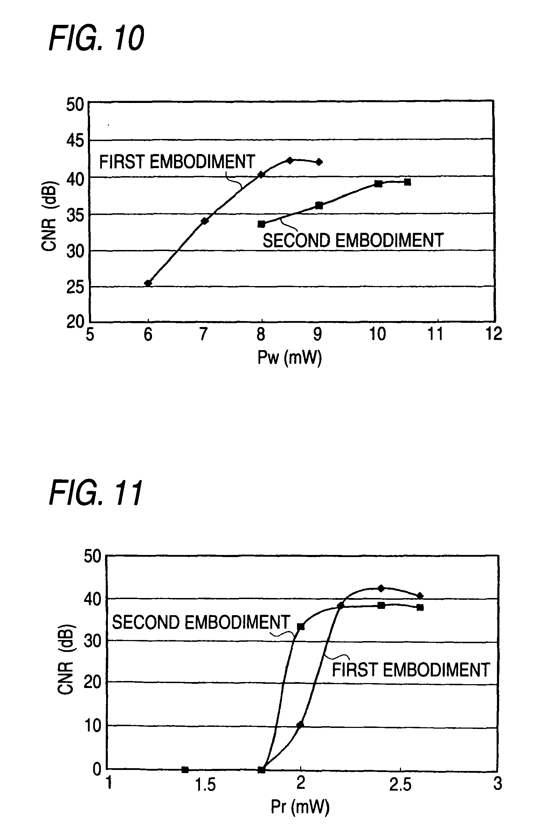

The thus-recorded single frequency signals were reproduced, and CNRs of the thus-reproduced signals were measured. The reproducing power (Pr) of the laser beam 40 was set to 2.4 mW. Measurement results are shown in Fig. 10.

As shown in Fig. 10, in relation to the optical recording medium sample of the first embodiment, the CNR has become increased in synchronism with the recording power in the recording power range of less than 8.5 mW However, in a recording power range of 8.5 mW or higher, the CNR is saturated, and no further improvement is found. Namely, for the optical recording medium sample of the first embodiment, the following recording power was obtained.

$$Pw2 = 8.5 \text{ mW}$$

In relation to the optical recording medium sample of the second embodiment, the CNR is increased in synchronism with the recording power in the recording power range of less than 10.0 mW However, in a recording power range of 10.0 mW or higher, the CNR is saturated, and no further improvement is found. In short, for the optical recording medium sample of the second embodiment, the following recording power was obtained.

$$Pw2 = 10.0 \text{ mW}$$

[Third evaluation of a characteristic]

Of the single frequency signals recorded in the "Second Evaluation of a characteristic," the single frequency signal recorded in the optical recording medium sample of the first embodiment with the recording power set to 8.5 mW and the single frequency signal recorded in the optical recording medium sample of the second embodiment with the recording power set to 10.0 mW were reproduced through use of various reproducing powers, and CNRs of the reproduced data was measured. Fig. 11 shows results of measurement of resultant CNRs.

As shown in Fig. 11, in any of the optical recording medium samples, the CNR achieved in the reproducing power range of less than 2.0 mW is less than 10 dB. When the reproducing power achieves 2.0 mW or higher, the CNR abruptly increases. Specifically, in both the optical recording medium samples of the first and second embodiments, the required reproducing power is

$$Pr2 = 2.0 \text{ mW}.$$

<Industrial Applicability>

The optical recording medium of the present invention has a noble metal nitride layer provided on a substrate, and bubble pits stemming from decomposition of the noble metal nitride layer are utilized as record marks. To do this, a gas filling the bubble pits, which are to become record marks, is a chemically-stable nitrogen gas ($N_2$). Consequently, the risk of the nitrogen gas ($N_2$) filling the bubble pits oxidizing or corroding other layers of the substrate, or the like, is very remote, and high storage reliability can be attained.

Moreover, the optical recording medium of the present invention enables super-resolution recording and reproduction by means of setting $\lambda$/NA to 640 nm or less by use of a laser beam having a wavelength of less than about 635 nm and an objective lens having a numerical aperture of about 0.6-plus. Particularly, a superior characteristic can be acquired through super-resolution recording and super-resolution reproduction involving use of a laser beam, whose wavelength is about 405 nm and which is to be used with an optical recording medium of next generation type, and an objective lens having a numerical aperture of about 0.85. Consequently, a recording/reproducing device analogous to a recording/reproducing device for use with an optical recording medium of next generation type can be used, and hence cost for developing and manufacturing the recording/reproducing device can be curtailed.

**Claims**

1. An optical recording medium comprising:

   a substrate; and
   a noble metal nitride layer provided on the substrate.

2. The optical recording medium according to claim 1, further comprising:

   a first dielectric layer provided on a light entrance face side of the substrate when viewed from the noble metal nitride layer; and
   a second dielectric layer provided on a side of the substrate opposite the light entrance face thereof when viewed from the noble metal nitride layer.

3. The optical recording medium according to claim 2, further comprising:

   a light absorption layer and a third dielectric layer, which are provided on a side of the substrate opposite the light entrance face thereof when viewed from the second dielectric layer and arranged in this sequence when viewed from the second dielectric layer.

4. The optical recording medium according to claim 3, further comprising:

a reflection layer provided on a side of the substrate opposite the light entrance face thereof when viewed from the third dielectric layer.

5. The optical recording medium according to any one of claims 1 through 4, wherein the noble metal nitride layer contains platinum nitride (PtNx).

6. The optical recording medium according to any one of claims 2 through 5, further comprising:

a light-transmitting layer which is provided opposite to the substrate when viewed from the first dielectric layer and has the light entrance face.

7. The optical recording medium according to claim 6, wherein a thickness of the substrate ranges from 0.6 mm to 2.0 mm; a thickness of the light-transmitting layer ranges from 10 $\mu$m to 200 $\mu$m; a thickness of the noble metal nitride layer ranges from 2 nm to 75 nm; a thickness of the second dielectric layer ranges from 5 nm to 100 nm; a thickness of the light absorption layer ranges from 5 nm to 100 nm; and a thickness of the third dielectric layer ranges from 10 nm to 140 nm.

8. A method for manufacturing an optical recording medium comprising:

a first step of forming on a support substrate, in this sequence, a reflection layer, a third dielectric layer, a light absorption layer, a second dielectric layer, a noble metal nitride layer, and a first dielectric layer; and
a second step of forming a light-transmitting layer on the first dielectric layer.

9. The method for manufacturing an optical recording medium according to claim 8, wherein processing pertaining to the first step is performed by means of a vapor phase deposition method, and processing pertaining to the second step is performed by means of a spin coating method.

10. A data recording method for recording data on the optical recording medium defined in any one of claims 1 through 7, to thus record data by irradiating a laser beam from the light entrance face, wherein,

when a wavelength of the laser beam is taken as $\lambda$ and a numerical aperture of an objective lens used for focusing the laser beam is taken as NA, a train of record marks, including record marks whose lengths are $\lambda/4NA$ or less, is recorded by setting $\lambda/NA$ to 640 nm or less.

11. A data reproduction method for reproducing data from the optical recording medium defined in any one of claims 1 through 7, to thus record data by irradiating a laser beam from the light entrance face, wherein,
when a wavelength of the laser beam is taken as $\lambda$ and a numerical aperture of an objective lens used for focusing the laser beam is taken as NA, data are reproduced from a train of record marks, including record marks whose lengths are $\lambda/4NA$ or less, by setting $\lambda/NA$ to 640 nm or less.

*FIG. 1 (a)*

*FIG. 1 (b)*

# FIG. 2

FIG. 3 (a)

FIG. 3 (b)

*FIG. 4*

W1

W2

23b

40     40

31

23

32

23a

*FIG. 5*

RECORD
MARK M1

RECORD
MARK M2

RECORD . . .
MARK M3

Pw

Pb

40a

## FIG. 6

RECORD MARK M1    RECORD MARK M2    RECORD MARK M3 ...

Pw

Pb

40a

## FIG. 7

CNR

Pw1        Pw2

RECORDING POWER

## FIG. 8

## FIG. 9

## FIG. 10

## FIG. 11

<table>
<tr><td colspan="2" align="center">**INTERNATIONAL SEARCH REPORT**</td><td>International application No.<br>PCT/JP2004/010787</td></tr>
</table>

**A. CLASSIFICATION OF SUBJECT MATTER**
Int.Cl$^7$ G11B7/24, 7/26, 7/00, B41M5/26

According to International Patent Classification (IPC) or to both national classification and IPC

**B. FIELDS SEARCHED**

Minimum documentation searched (classification system followed by classification symbols)
Int.Cl$^7$ G11B7/24, 7/26, 7/00, B41M5/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E | JP 2004-220687 A (Samsung Japan Corp.), 05 August, 2004 (05.08.04), Full text; all drawings (Family: none) | 1-11 |
| P | JP 2004-39177 A (National Institute of Advanced Industrial Science and Technology), 05 February, 2004 (05.02.04), Full text; all drawings (Family: none) | 1-11 |
| A | JP 1-229438 A (Daicel Chemical Industries, Ltd.), 01 September, 1989 (01.09.89), Full text; all drawings (Family: none) | 1-11 |

| | | | |
|---|---|---|---|
| ☒ Further documents are listed in the continuation of Box C. | | ☐ See patent family annex. | |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>23 August, 2004 (23.08.04) | Date of mailing of the international search report<br>07 September, 2004 (07.09.04) |
|---|---|
| Name and mailing address of the ISA/<br>Japanese Patent Office | Authorized officer |
| Facsimile No. | Telephone No. |

**INTERNATIONAL SEARCH REPORT**

| International application No. |
| --- |
| PCT/JP2004/010787 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2-261822 A (Mitsui Petrochemical Industries, Ltd.), 24 October, 1990 (24.10.90), Full text; all drawings (Family: none) | 1-11 |